# EUROPÄISCHE PATENTSCHRIFT

(11) **EP 1 454 596 B1**
(45) Veröffentlichungstag und Bekanntmachung des Hinweises auf die Patenterteilung: **21.02.2007**
(21) Anmeldenummer: 03004739.3
(22) Anmeldetag: 04.03.2003
(51) Int. Cl.: A61C 13/08, A61C 13/09

(54) **Blenden für Zahnersatz**
Faceplates for artificial teeth
Façades pour dents artificielles

(43) Veröffentlichungstag der Anmeldung: 08.09.2004
(73) Patentinhaber: Merz Dental GmbH, 24321 Lütjenburg (DE)
(72) Erfinder: Burkhardt, Hans-Joachim, Dr., 73269 Hochdorf (DE); Becker, Frank, 24321 Lütjenburg (DE)
(74) Vertreter: Glawe, Delfs, Moll

(56) Entgegenhaltungen:
- EP-A- 0 763 351
- DE-A- 1 566 259
- FR-A- 1 331 202
- US-A- 2 302 375
- US-A- 2 419 084
- US-A- 3 004 343

## Beschreibung

Die Erfindung betrifft ein Verfahren zur Herstellung von Blenden für Zahnersatz umfassend die Schritte Formen einer dünnwandigen Schale aus Kunststoffmaterial, die eine nach außen gewandte Schauseite und eine zu einem Zahnersatz gerichtete Innenseite aufweist, durch Pressen oder Spritzen wobei ein geschichteter Aufbau durch Aufbringen einer gesonderten Färbungsschicht an der Innenseite der Schale hergestellt wird. Die Erfindung betrifft ferner eine entsprechende Blende.

Bei der Anfertigung von Zahnersatz stellt sich das Problem, den Zahnersatz zumindest an seiner Vorderseite so zu verblenden, daß eine vorteilhafte Ästhetik erzielt wird. Zu diesem Zweck kann solches Material verwendet werden, das bereits von Haus aus eine ansprechende Ästhetik mit sich bringt, wie bspw. Porzellan, Keramik oder auch Kunststoff. Um mehr Gestaltungsfreiräume zu haben, sind mehrteilige Konstruktionen entwickelt worden. Bei diesen ist ein Grundelement aus mechanisch hinreichend festem Material und ein Verblendungselement vorgesehen, das an der sichtbaren Außenseite des Grundelements angebracht wird und ihn so den Blicken anderer entzieht. Für das Verblendungselement kann das Material hauptsächlich nach ästhetischen Gesichtspunkten ausgewählt werden, da die mechanischen Lasten hauptsächlich von dem Grundelement aufgenommen werden. Zur Herstellung der Verblendungselemente sind verschiedene Verfahren bekannt geworden:

Aus der US-A-2 302 375 ist es bekannt, das Grundelement als einen nicht sichtbaren Träger derart auszuführen, dass es sowohl nach vorne hin wie auch zur Beißfläche hin von einem anderen Element übergriffen ist. An dem frontal sichtbaren Teil dieses übergreifenden Elements kann eine Färbungsschicht angeordnet sein. Allerdings erstreckt sie sich nur über einen Teil der Höhe, nämlich über einen der Höhe des Trägers entsprechenden Bereich; der übrige Bereich des übergreifenden Elements ist nicht mit einer Färbungsschicht versehen. Ein ähnlicher Zahnersatz ist aus der FR-A-1 331 202 bekannt. Sie sieht ebenfalls ein die Frontsicht und Bissfläche übergreifendes Element vor, an dessen Rückseite eine sich bandförmig über die ganze Breite, aber nur einen kleinen Teil der Höhe erstreckende Färbungsschicht vorgesehen ist.

Weiter ist es aus offenkundiger Vorbenutzung bekannt, die Verblendungselemente als dünne Schale aus einem transparenten Kunststoffmaterial herzustellen. Diese Schalen waren dazu vorgesehen, auf die passend geformte Außenseite des Grundelements aufgesetzt zu werden und diesen somit nach außen hin zu verblenden. Der Nachteil dieser Schalen liegt darin, daß durch die transparente Gestaltung eine natürliche Ästhetik nur im Bereich der Schneidkante erreicht wird, im Übrigen aber ein unnatürlicher Farbverlauf entsteht. Eine vorteilhafte Ästhetik ist damit nicht erreichbar.

Ferner ist es aus offenkundiger Vorbenutzung bekannt, auf das Grundelement Kunststoffmaterial aufzutragen. Dieses Kunststoffmaterial weist eine gewünschte Einfärbung auf, so daß das aufgetragene Kunststoffmaterial das Grundelement nach außen hin verblendet. Nach dem Auftragen wird das Kunststoffmaterial durch Bestrahlung mit Licht gehärtet, so daß es formstabil wird. Es hat sich aber gezeigt, daß die hierzu verwendbaren Kunststoffmaterialien anfällig für Plaquebildung sind. Dies ist unter mundhygienischen Aspekten ein schwerer Nachteil. Ein weiterer Nachteil dieser Vorgehensweise besteht darin, daß das Auftragen des Kunststoffmaterials von Hand aufwendig und daher teuer ist.

Eine weitere, aus offenkundiger Vorbenutzung bekannte Vorgehensweise besteht darin, serienmäßig hergestellte Ersatzzähne, wie sie für Zahnprothesen verwendet werden, als Ausgangsbasis zu nehmen und sie von innen her soweit auszuschleifen, bis schließlich nur ihre Vorderseite als Schale übrig ist. Der Nachteil an dieser Vorgehensweise ist, daß sehr viel Material weggeschliffen werden muß, um aus einem Konfektionszahn schließlich eine hinreichend dünne Schale zu erhalten. Das ist aufwendig und fehleranfällig. Ein weiterer Nachteil besteht darin, daß bedingt durch das starke Abschleifen die ursprünglich bei den Konfektionszähnen vorhandene Färbung verlorengeht oder soweit verändert wird, daß die Ästhetik benachteiligt beeinflußt wird.

Ausgehend von der erstgenannten Vorbenutzung liegt der Erfindung die Aufgabe zugrunde, eine verbesserte Blende bzw. ein verbessertes Verfahren zur Herstellung der Blende zu schaffen, wobei eine verbesserte natürlich wirkende Ästhetik bei möglichst geringem Aufwand erreicht werden soll. Insbesondere soll sich die Blende für eine maschinelle Fertigung eignen.

Die erfindungsgemäße Lösung liegt in einem Herstellungsverfahren mit dem Merkmalen des Anspruchs 1 und einer dementsprechend hergestellten Blende mit den Merkmalen des Anspruchs 5.

Erfindungsgemäß ist ein Verfahren zur Herstellung von Blenden für Zahnersatz umfassend die Schritte Formen einer dünnwandigen Schale aus Kunststoffmaterial, die eine nach außen gewandte Schauseite und eine zu einem Zahnersatz gerichtete Innenseite aufweist, durch Pressen, Spritzen oder ähnliches vorgesehen, bei dem ein geschichteter Aufbau der Blende hergestellt wird, in dem eine gesonderte Färbungsschicht an einer Innenseite der Schale aufgebracht wird, wobei der Schneidebereich der Blende beim Aufbringen der Färbungsschicht ausgespart wird, die Dicke der Färbungsschicht entlang der Längsachse der Blende variierte und eine Klebeschicht aufgebracht wird.

Der Kern der Erfindung liegt in dem Gedanken, einen geschichteten Aufbau der Blende herzustellen. Dieser besteht aus der dünnen Schale, die als Träger fungiert, und einer darauf aufgebrachten Farbschicht, die zur möglichst naturgetreu erscheinenden Einfärbung der Blende dient. Bei dem erfindungsgemäßen Verfahren werden die Schale als Träger und die zur Einfärbung dienende Farbschicht getrennt voneinander erzeugt. Dies bringt den Vorteil mit sich, daß die Stärke der Schale unabhängig gewählt werden kann von der gewünschten Färbung. Dadurch kann der Farbverlauf nach Wunsch eingestellt werden, ohne daß hierbei in die Schale und deren Kontur eingegriffen werden müßte. Ein arbeitsaufwendiges und fehlerträchtiges Ausschleifen, wie es bei der Verwendung von Konfektionszähnen als Ausgangsmaterial erforderlich ist, entfällt bei den erfindungsgemäß hergestellten Blenden. Bei den durch Ausschleifen hergestellten Blenden waren Durchsichtigkeit und Färbung stets miteinander verkoppelt; je mehr Material abgetragen worden ist, desto durchsichtiger wurde die Blende und desto schwächer wurde die Färbung. Bei der Erfindung ist dies anders. Hier können die Durchsichtigkeit und die Färbung frei und unabhängig voneinander dank des mehrschichtigen Aufbaus bestimmt werden. Beim natürlichen Zahn ist die Schneidekante aufgrund der geringen Materialstärke häufig zumindest in ihrem äußeren Randbereich transparent. Dies kann bei der erfindungsgemäßen Blende dadurch erreicht werden, daß der Bereich in der Nähe der vorgesehenen Schneidekante beim Auftragen der Färbungsschicht ausgespart wird. Somit bleibt die Transparenz des für die Schale verwendeten Materials in diesem Bereich erhalten. Damit und durch die Variation der Stärke der Färbungsschicht kann eine besonders natürlich wirkende Ästhetik erreicht werden. Ferner ist es leicht möglich, in Abhängigkeit von dem dahinter befindlichen Material und dessen Färbung die Färbungsschicht so zu variieren, daß sich das gewünschte Gesamtbild ergibt. Das ist insbesondere dann von Bedeutung, wenn in einer weiteren Schicht helles Material verwendet wird, wie bspw. Dentin. Zur Befestigung der Schale dient eine Klebeschicht, die vorzugsweise auf der Basis von PMMA, bzw. eines Komposite-Materials oder auf der Basis eines Zementes mit Bonding besteht. Dieses kann mit Vorteil selbst eingefärbt oder mit der Färbungsschicht kombiniert sein. Auf diese Weise können die Funktionen Befestigen an dem Grundelement des Zahnersatzes verknüpft werden mit ästhetischen Vorteilen. Eine Einfärbung des für die Klebeschicht verwendeten Mittels bietet insbesondere dann Vorteile, wenn keine Schattierungsschicht vorgesehen ist. Das erfindungsgemäße Herstellungsverfahren eignet sich auch besonders zur maschinellen Fertigung. Die Erfindung verknüpft daher die Vorteile bezüglich des sich ergebenden ästhetischen Eindrucks mit einem geringeren Herstellungsaufwand.

Auch wenn an sich beliebiges Kunststoffmaterial für die Schale verwendet werden kann, das sich zur Formgebung durch Pressen oder Spritzen eignet, so ist die Schale doch bevorzugt aus Polymethylmethacrylat (PMMA) hergestellt. Dieses Material hat insbesondere den Vorteil, daß es gut verarbeitbar ist, wenig kostenaufwendig ist und im Übrigen nicht zur Plaquebildung neigt.

Zur weiteren Annäherung der optischen Wirkung der erfindungsgemäßen Blende an das natürliche Original ist es ferner zweckmäßig, die Schale semi-transparent auszubilden. Zusammen mit der erfindungsgemäß dahinter angeordneten Färbungsschicht ergibt sich somit ein Erscheinungsbild, das dem eines natürlichen, mit Schmelz überzogenen Zahns weitestgehend nachgeahmt ist. Zur weiteren Erhöhung des möglichst natürlichen Aussehens kann vorgesehen sein, zusätzlich eine Schattierungsschicht aufzubringen. Diese wird zweckmäßigerweise so aufgebracht, daß sie unmittelbar mit dem Zahnersatz in Kontakt kommt. Die Schattierungsschicht bewirkt, daß auch bei nur schwacher Färbung ein Durchscheinen von dahinterliegenden, möglicherweise aus dunklerem Material gefertigten Zahnersatzelementen vermieden wird. Man erhält so die Freiheit, das Material für die übrigen Zahnersatzelemente freier zu wählen, ohne dabei auf unerwünschte ästhetische Nebeneffekte achten zu müssen.

Die Erfindung erstreckt sich ferner auf eine Blende für Zahnersatz gemäß Anspruch 5. Die vorstehend gegebenen Erläuterungen zu dem Herstellungsverfahren gelten für sie sinngemäß.

Die Erfindung wurde vorstehend in Bezug auf ein künstlich geschaffenes Zahnersatzelement erläutert. Dabei kann es sich um eine Krone, eine Brücke oder eine Teil- oder Vollprothese handeln.

Die Erfindung wird nachfolgend erläutert unter Bezugnahme auf die beigefügte Zeichnung, in der ein vorteilhaftes Ausführungsbeispiel dargestellt ist. Darin zeigen:
- Fig. 1: eine perspektivische Darstellung einer erfindungsgemäßen Blende vor dem Aufsetzen auf ein Zahnersatzelement;
- Fig. 2 a, b: die erfindungsgemäße Blende vor (a) und nach (b) dem Aufbringen der Färbungsschicht; und

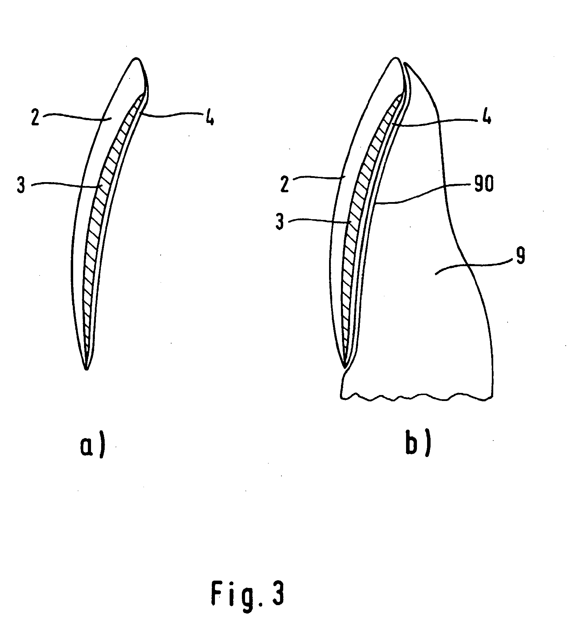

- Fig. 3 a, b: die erfindungsgemäße Blende nach dem Aufbringen einer Klebeschicht vor (a) und nach (b) ihrer Befestigung an dem Zahnersatzelement.

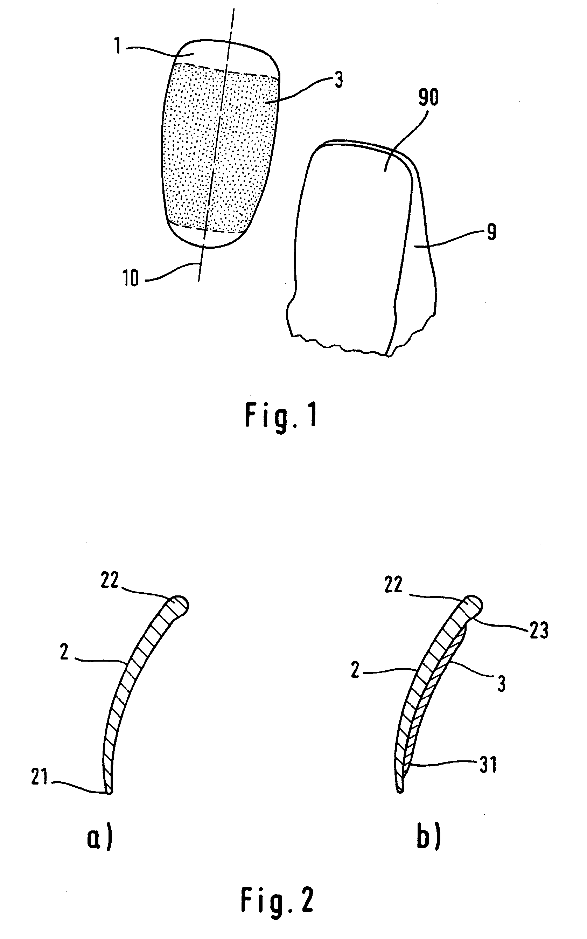

In Fig. 1 ist eine erfindungsgemäß hergestellte Blende 1 in perspektivischer Darstellung zusammen mit einem Zahnersatzelement 9 dargestellt, das zur Verblendung mittels der erfindungsgemäßen Blende 1 vorgesehen ist.

Die erfindungsgemäße Blende umfaßt als Basisschicht eine Schale 2 und eine an der Innenseite der Schale 2 aufgebrachte Färbungsschicht 3. Unter der Innenseite der Schale 2 wird diejenige Seite verstanden, die zum Aufsetzen auf eine entsprechende Vorderseite 90 des Zahnersatzelements vorgesehen ist. Die Färbungsschicht 3 besteht aus einem an sich bekannten, zur Farbgebung von transparentem oder transluzentem Zahnersatz verwendeten Farbstoff, insbesondere aus einem Verblendkunststoff aus PMMA. Die Färbungsschicht ist in einer für eine ausreichende Einfärbung notwendigen Stärke von 0,2 - 1,5 mm aufgetragen, üblicherweise etwa 1 mm.

Die Stärke der Einfärbungsschicht 3 variiert über die Längsachse 10 der Blende. Sie ist an dem gingivalen Ende 21 der Blende 2 geringer als im mittleren Bereich, wo sie eine etwa gleichbleibende Stärke aufweist. In dem inzisalen Bereich 22 der Blende 2 ist die Dicke der Farbschicht bis auf Null reduziert, d. h. hier ist keine Farbschicht aufgetragen. Dies hat den Zweck, die natürlicherweise insbesondere im Inzisalbereich der Frontzähne vorhandene Transparenz der natürlichen Zähne möglichst naturgetreu wiederzugeben. Das Aufbringen einer Färbungsschicht 3 wäre in diesem Bereich kontraproduktiv. Zur Gewährleistung einer ausreichenden Festigkeit weist die Blende 2 in ihrem inzisalen Bereich 22 eine erhöhte Stärke auf. Gewünschtenfalls kann an der Rückseite 23 ein Fortsatz (nicht darstellt) angeordnet sein, der sich nach hinten in gingivaler Richtung bis hin zum Beginn der Färbungsschicht 3 bzw. der Klebeschicht 4 erstreckt. Die Färbungsschicht 3 ist dann geschützter angeordnet, so daß sich die Verschleißfestigkeit des Zahnersatzes erhöht.

Zur Befestigung der mehrschichtigen Blende 1 an dem Zahnersatzteil 9 ist eine Klebeschicht 4 vorgesehen, die innenseitig auf die Färbungsschicht 3 aufgetragen wird. Als Material für die Klebeschicht kann Harz verwendet werden, bspw. auf Basis von PMMA, bzw. eines Komposite-Materials oder auf Basis eines Zementes mit Bonding. Insbesondere Kleber auf PMMA-Basis haben den Vorteil, daß sie sich gut mit der Färbungsschicht, die ebenfalls aus PMMA besteht, vertragen. Damit wird die Blende 1 sicher und dauerhaft an dem Zahnersatzelement 9 befestigt. Vorzugsweise weist das Zahnersatzelement 9 an seiner Vorderseite 90 einen als Kehlung ausgearbeiteten Aufnahmebereich für die Blende 1 auf. Damit läßt sich die Blende 1 besonders harmonisch in das Zahnersatzelement 9 integrieren. Darüber hinaus sichert sie die Blende 1 zusätzlich gegenüber einem Verrutschen in gingivaler Richtung. Die Auskehlung braucht nicht besonders tief ausgearbeitet zu sein, da die erfindungsgemäße Blende 1 insgesamt sehr dünn ausgeführt sein kann. In den Zeichnungen sind die Schichtdicken zur Verdeutlichung übertrieben dick gezeichnet. Bei einer bewährten Ausführungsform lauten die Maßangaben für die Stärke der Schale 0,3 bis 0,4 mm, für die Stärke der Färbungsschicht 3 etwa 0,2 bis maximal 1,5 mm, so daß sich insgesamt eine Stärke der Blende 1 von 0,5 bis 1,7 mm, vorzugsweise 1,5 mm ergibt.

Die Schale der Blende 1 wird aus einem Kunststoffmaterial, insbesondere PMMA (Polymethylmethacrylat), durch an sich bekannte Kunststoffverarbeitungsverfahren wie Pressen oder Gießen hergestellt. Das Material ist vorzugsweise semi-transparent. Die Stärke der Schale 2 kann sehr dünn gewählt sein. Dies kann ganz nach den jeweiligen Erfordernissen des Zahnersatzelements erfolgen. Rücksicht darauf, daß durch eine verringerte Materialstärke sich möglicherweise Farbveränderungen ergebenen oder die Gefahr des Durchscheinens des dahinter liegenden Zahnersatzelements 9 entsteht, braucht dank der erfindungsgemäß aufgebrachten Färbungsschicht nicht genommen zu werden. Dank der Erfindung ist es ermöglicht, über die Stärke der Schale 2 die Transparenz und über die Farbschicht 3 die Färbung der Blende 1 völlig unabhängig voneinander einzustellen. So gelingt auch unabhängig von der Farbe des Zahnersatzelements 9 ein guter ästhetischer Eindruck.

Bei sehr dunklem Material für das Zahnersatzelement 9 kann es zweckmäßig sein, noch eine gesonderte Schattierungsschicht vorzusehen, die unmittelbar auf das Zahnersatzelement 9 aufgebracht wird. Damit wird ein Durchscheinen des Zahnersatzelements 9 sicher verhindert. Zudem verleiht eine solche Schattierungsschicht dem optischen Eindruck der Blende 1 eine größere räumliche Tiefe, so daß sich der natürliche Eindruck weiter verbessert.

## Patentansprüche

1. Verfahren zur Herstellung von Blenden für Zahnersatz umfassend die Schritte Formen einer dünnwandigen Schale (2) aus Kunststoffmaterial, die eine nach außen gewandte Schauseite und eine zu einem Zahnersatz gerichtete Innenseite aufweist, durch Pressen oder Spritzen, Herstellen eines geschichteten Aufbaus der Blende (1), in dem eine gesonderte Färbungsschicht (3) an der Innenseite der Schale (2) aufgebracht wird,
**gekennzeichnet durch**,
Variieren der Stärke der Färbungsschicht (3) entlang der Längsachse (10) der Blende (1), Aussparen eines Schneidbereichs (22) bei dem Aufbringen der Färbungsschicht (3), und Aufbringen einer Klebeschicht (4).

2. Verfahren nach Anspruch 1, **gekennzeichnet durch**
eine semi-transparente Ausführung der Schale (2).

3. Verfahren nach Anspruch 1 oder 2, **gekennzeichnet durch**
Aufbringen einer kombinierten Färbungs- und Klebeschicht.

4. Verfahren nach einem der vorhergehenden Ansprüche, **gekennzeichnet durch**
Verwenden von Polymethylmethacrylat als Kunststoffmaterial.

5. Blende für Zahnersatz bestehend aus einer dünnwandigen Schale (2), die aus einem Kunststoffmaterial hergestellt ist, wobei die Blende (1) mehrschichtig ausgeführt ist, wobei die Schale (2) eine Trägerschicht bildet und eine Färbungsschicht (3) auf einer Innen-seite der Schale (2) aufgebracht ist,
**dadurch gekennzeichnet, daß**
die Stärke der Färbungsschicht (3) entlang der Längs-achse (10) der Blende (1) variiert, daß im Schneidebereich (22) keine Färbungsschicht (3) aufgebracht ist, und eine zusätzliche Klebeschicht (4) vorgesehen ist.

6. Blende nach Anspruch 5, **dadurch gekennzeichnet, daß**
die Schale (2) semi-transparent ausgeführt ist.

7. Blende nach Anspruch 5 oder 6, **dadurch gekennzeichnet, daß**
eine kombinierte Färbungs- und Klebeschicht aufgebracht ist.

8. Blende nach einem der Ansprüche 5 bis 7, **dadurch gekennzeichnet, daß**
das Kunststoffmaterial ein Polymethylmethacrylat ist.

## Claims

1. Method for production of veneers for artificial teeth, comprising the steps of using a plastic material to form a thin-walled shell (2), which has an outwardly facing visible surface and an inner surface directed towards an artificial tooth, by compression-moulding or injection-moulding, and producing a layered structure of the veneer (1) in which a separate pigmentation layer (3) is applied to the inner surface of the shell (2), **characterized by** varying the thickness of the pigmentation layer (3) along the longitudinal axis (10) of the veneer (1), cutting out an incision area (22) upon application of the pigmentation layer (3), and applying an adhesion layer (4).

2. Method according to Claim 1, **characterized by** a semi-transparent design of the shell (2).

3. Method according to Claim 1 or 2, **characterized by** applying a combined pigmentation and adhesion layer.

4. Method according to one of the preceding claims, **characterized by** using polymethyl methacrylate as plastic material.

5. Veneer for an artificial tooth, comprising a thin-walled shell (2) produced from a plastic material, the veneer (1) having a multi-layer design, the shell (2) forming a support layer, and a pigmentation layer (3) being applied to an inner surface of the shell (2), **characterized in that** the thickness of the pigmentation layer (3) along the longitudinal axis (10) of the veneer (1) varies, and **in that** no pigmentation layer (3) is applied in the incision area (22), and an additional adhesion layer (4) is provided.

6. Veneer according to Claim 5, **characterized in that** the shell (2) has a semi-transparent design.

7. Veneer according to Claim 5 or 6, **characterized in that** a combined pigmentation and adhesion layer is applied.

8. Veneer according to one of Claims 5 to 7, **characterized in that** the plastic material is a polymethyl methacrylate.

## Revendications

1. Procédé pour la fabrication de façades pour des dents artificielles comprenant les étapes de formage d'une coque (2) à paroi mince à base de matériau plastique, qui présente un côté visible tourné vers l'extérieur et un côté intérieur dirigé vers une dent artificielle, par compression ou pulvérisation, fabrication d'une structure stratifiée de la façade (1), dans laquelle est appliquée une couche de coloration (3) séparée sur le côté inférieur de la coque (2),
**caractérisé par**
la variation de l'épaisseur de la couche de coloration (3) le long de l'axe longitudinal (10) de la façade (1), l'évidement d'une zone de coupe (22) lors de l'application de la couche de coloration (3), et l'application d'une couche de colle (4).

2. Procédé selon la revendication 1, **caractérisé par**
une réalisation semi-transparente de la coque (2).

3. Procédé selon la revendication 1 ou 2, **caractérisé par**
l'application d'une couche mixte de coloration et d'adhésion.

4. Procédé selon l'une quelconque des revendications précédentes,
**caractérisé par**
l'utilisation de polyméthylméthacrylate comme matériau plastique.

5. Façade pour dent artificielle comprenant une coque (2) à paroi mince, qui est fabriquée à partir d'un matériau plastique, la façade (1) étant réalisée avec plusieurs couches, la coque (2) formant une couche support et une couche de coloration (3) étant appliquée sur un côté intérieur de la coque (2),
**caractérisée en ce que**
l'épaisseur de la couche de coloration (3) varie le long de l'axe longitudinal (10) de la façade (1), **en ce qu'**aucune couche de coloration (3) n'est appliquée dans la zone de coupe (22), et une couche adhésive (4) supplémentaire est prévue.

6. Façade selon la revendication 5, **caractérisée en ce que**
la coque (2) est réalisée de façon semi-transparente.

7. Façade selon la revendication 5 ou 6, **caractérisée en ce que**
une couche mixte de coloration et d'adhésion est appliquée.

8. Façade selon l'une quelconque des revendications 5 à 7,
**caractérisée en ce que**
le matériau plastique est un polyméthylméthacrylate.
